# FASCICULE DE BREVET EUROPEEN

(11) **EP 0 950 037 B1**
(45) Date de publication et mention de la délivrance du brevet: **19.12.2001**
(21) Numéro de dépôt: 97945921.1
(22) Date de dépôt: 13.11.1997
(51) Int. Cl.: C04B 35/581, C04B 35/65, C04B 41/45, C04B 37/00

(54) **PROCEDE DE FABRICATION D'UNE PIECE CERAMIQUE STRUCTURALE FRITTEE EN NITRURE D'ALUMINIUM**
VERFAHREN ZUR HERSTELLUNG EINES KERAMISCHEN SINTERBAUTEILS AUS ALUMINIUMNITRID
PROCESS FOR MANUFACTURING A SINTERED STRUCTURAL CERAMIC PART OF ALUMINUM NITRIDE

(30) Priorité: 27.12.1996 FR 9616135
(43) Date de publication de la demande: 20.10.1999
(73) Titulaire: ONERA (Office National d'Etudes et de Recherches Aérospatiales), 92320 Châtillon (FR); ELECTRICITE DE FRANCE, 75008 Paris (FR)
(72) Inventeur: SOUDAREV, A. Maison 243 - Bât. 1- App.57, Saint-Petersbourg, 198259 (RU); GRISHAEV,V. Maison 8 - Bât. 2 - App. 169, Saint-Petersbourg, 195247 (RU); AVRAN, Patrick, F-91120 Palaiseau (FR)
(74) Mandataire: Rousset, Jean-Claude
(86) Numéro de dépôt international: FR9702042
(87) Numéro de publication internationale: WO9829354

(56) Documents cités:
- EP-A- 0 164 830
- EP-A- 0 469 149
- US-A- 3 833 389

## Description

L'invention concerne un procédé de fabrication d'une pièce en un matériau céramique structural résistant à haute température, à base de nitrure d'aluminium AlN, par frittage-réaction.

Le nitrure d'aluminium est un matériau céramique qui présente à ce titre une masse volumique relativement faible (2,8 g/cm³), et une bonne tenue aux températures élevées (1800 K) en atmosphère oxydante et corrosive. Ce matériau particulier possède également d'autres propriétés intéressantes comme une bonne conductibilité thermique (15 à 18 W/m.K) et un coefficient de dilatation thermique élevé (9×10⁻⁶/°C) qui lui permet d'être assemblé à des métaux, notamment par la technique de brasage-diffusion. L'ensemble de ces propriétés rend l'utilisation du nitrure d'aluminium avantageuse pour diverses applications, notamment dans les domaines des échangeurs thermiques, pièces pour l'automobile, isolants électriques, composants électroniques, joints de robinets.

Les procédés connus pour réaliser un matériau céramique à partir d'aluminium et de nitrure de bore conduisent à des produits présentant certains au moins des défauts suivants:
- structure hétérogène à gros grains et porosité élevée ne permettant pas une reproductibilité des propriétés;
- absence d'une structure monophasée;
- température de service limitée à 600°C;
- résistance mécanique inférieure à 30 MPa.

La technique de frittage-réaction, qui consiste à réaliser une pièce en céramique directement par une réaction chimique entre des réactifs à l'état de particules distribués de manière homogène dans le composite métal-céramique de la préforme, permet d'obtenir cette pièce à une température inférieure à celle requise pour le frittage de particules préexistantes du matériau céramique. Cependant, le processus de frittage-réaction s'accompagne habituellement d'un retrait volumique important qui oblige à usiner la pièce à ses cotes définitives après la transformation, en utilisant des outils diamantés coûteux seuls capables de travailler les céramiques. De plus, les processus de frittage-réaction utilisant comme réactif l'aluminium pour fournir un composé céramique d'aluminium laissent subsister des quantités appréciables d'aluminium libre résiduel qui nuisent à la tenue en température du matériau.

Le but de l'invention est de remédier à ces inconvénients.

Le procédé selon l'invention comprend les étapes suivantes:
a) préparation d'un mélange homogène de nitrure de bore BN, d'aluminium et d'un liant, à l'état liquide ou pâteux, propre à se solidifier par réaction chimique et/ou par séchage d'un solvant, le nitrure de bore et l'aluminium étant sous forme de poudres;
b) mise en forme dudit mélange par coulage en moule suivi de pressage et de chauffage à une température ne dépassant pas 70 °C environ pour durcir le liant et obtenir un cru solide et manipulable;
c) élimination du liant par chauffage à une température de l'ordre de 300°C;
d) imprégnation des pores du cru par immersion dans un bain d'aluminium ou d'un alliage d'aluminium à l'état fondu, séparation de la préforme imprégnée dudit bain et refroidissement;
e) usinage de la préforme en composite Al-BN aux cotes définitives de la pièce à obtenir;
f) frittage-réaction à une température comprise entre 900 et 1000 °C pour former une céramique à base de nitrure d'aluminium;
g) traitement thermique à une température comprise entre 1100 et 1250 °C pour faire migrer l'aluminium résiduel hors des pores de la pièce, et élimination mécanique de l'aluminium rassemblé en surface après refroidissement éventuel.

L'une des originalités de l'invention résulte de la succession des étapes a) à c), et notamment de l'imprégnation par de l'aluminium ou un alliage d'aluminium liquide d'un cru céramique contenant déjà de l'aluminium, ce qui amène à une ébauche de pièce constituée d'un composite BN/alliage d'aluminium propre à subir un frittage-réaction sans retrait appréciable, et dont la cohérence résultant de l'absence de porosité en permet l'usinage à l'aide des outils classiques sans diamant utilisés pour les alliages d'aluminium, notamment ceux en acier rapide supérieur, pour obtenir une pièce dont les cotes seront conservées après frittage-réaction (étape e).

L'étape f) conduit à la formation d'une céramique à base de nitrure d'aluminium AlN, et d'un ou plusieurs borures d'aluminium tels que AlB₂, AlB₁₀, AlB₁₂ et AlB₂₅. L'augmentation de volume qui accompagne ces réactions compense le retrait dû au frittage du matériau céramique et permet d'obtenir des pièces à très faible taux de porosité.

Il subsiste néanmoins un réseau poreux permettant à l'aluminium résiduel, fondu lors du traitement thermique de l'étape g), de s'écouler vers la surface de la pièce, d'où il peut être éliminé mécaniquement d'une manière très simple, par brossage par exemple.

Les pièces en céramique réalisées par la présente invention présentent également la caractéristique de pouvoir être assemblées par brasage-diffusion. L'assemblage peut se faire soit avec deux pièces en céramique, soit avec deux pièces en composite Al-BN, soit avec une pièce en céramique et une pièce en composite Al-BN; l'assemblage, par brasage, peut être réalisé en utilisant une brasure de composition adéquate et en opérant à une température supérieure de 20 °C à la température de fusion de la brasure, constituée d'un alliage Al-Si. L'assemblage par brasage diffusion est suivi d'un traitement de frittage-réaction.

Des caractéristiques optionnelles de l'invention, complémentaires ou alternatives, sont énoncées ci-après:
- Dans l'étape a), on mélange 30 à 60 parties en poids de BN et 70 à 40 parties en poids d'aluminium, et de préférence environ 40 parties en poids de BN et 60 parties en poids d'aluminium.
- L'étape a) est subdivisée en
   a1) préparation d'un premier mélange formé de poudres de BN et d'aluminium et d'une première fraction de liant;
   a2) compactage par pressage sous une pression de 30 à 140 bars du premier mélange en un lingot et chauffage pour durcir le liant;
   a3) élimination du liant;
   a4) imprégnation des pores du lingot par de l'aluminium à l'état fondu, pour obtenir un lingot de composite Al-BN;
   a5) usinage en copeaux du lingot de composite Al-BN, mélange avec de la poudre de BN et broyage;
   a6) mélange de la poudre résultante avec une seconde fraction de liant.
- Les proportions massiques des constituants sont voisines de 90% de BN pour 10% d'aluminium dans l'étape a1), 60% de copeaux du premier composite Al-BN pour 40% de poudre de BN dans l'étape a5) et 75% de poudres pour 25% de liant dans les étapes a1) et a6).
- Le liant est une solution aqueuse d'un polymère organique, préférentiellement de l'alcool polyvinylique.
- La mise en forme de l'étape b) et/ou le compactage du stade a2) sont effectués sous une pression voisine de 45 bars.
- L'imprégnation de l'étape c) et/ou du stade a3) est réalisée par immersion dans le bain d'imprégnation d'abord sous vide, de préférence sous une pression résiduelle de l'ordre de 10 Pa, puis sous pression comprise entre 40 et 60 bars, de préférence 50 bars.
- L'imprégnation de l'étape c) est réalisée par un alliage d'aluminium et de silicium dont la température de fusion est inférieure à celle de l'aluminium, de préférence un alliage eutectique, porté à une température comprise entre 740 et 850 °C, de préférence d'environ 800 °C.
- L'étape f) est réalisée en atmosphère neutre, préférentiellement sous azote.
- Le traitement thermique de l'étape g) est réalisé à l'air à la pression atmosphérique.
- On prépare séparément deux composants en mettant en oeuvre au moins les étapes a) à e), on assemble ces deux composants par brasage-diffusion et on soumet le cas échéant l'assemblage obtenu aux étapes du procédé qui ont été omises pour l'un au moins des composants.
- Les deux composants sont obtenus à l'issue de l'étape e) et l'assemblage par brasage-diffusion est suivi d'un frittage-réaction effectué dans l'intervalle de 950 à 1250 °C, préférentiellement à environ 950 °C pendant environ 1 heure puis à environ 1250 °C pendant environ deux heures.
- Les deux composants sont obtenus à l'issue d'un frittage-réaction à une température comprise entre 950 et 1100 °C, préférentiellement 1000 °C environ, et l'assemblage par brasage-diffusion est suivi d'un post-frittage réalisé entre 1000 et 1250 °C, préférentiellement à 1100 °C environ.

L'utilisation d'un alliage d'aluminium et de silicium, et notamment d'un alliage eutectique, permet d'abaisser la température d'imprégnation du cru. De plus, la présence de silicium dans le matériau céramique obtenu conduit à la formation de trichites de nitrure de silicium Si₃N₄, améliorant les propriétés mécaniques de la céramique obtenue par frittage-réaction.

Lors du traitement thermique final à l'air, il peut se former en surface des composés oxydés de bore et/ou d'aluminium, et/ou le cas échéant de silicium, qui colmatent les pores superficiels, rendant la pièce imperméable et très résistante à la corrosion. L'étanchéité peut également être améliorée par un revêtement connu de type gel de silice appliqué à une température comprise entre 850 et 1200 °C.

La réalisation de l'étape g) en plusieurs cycles successifs permet d'utiliser à cet effet un four classique. Elle peut être réalisée en une seule étape si on dispose de moyens permettant d'éliminer l'aluminium liquide à mesure qu'il parvient à la surface de la pièce, par exemple par centrifugation.

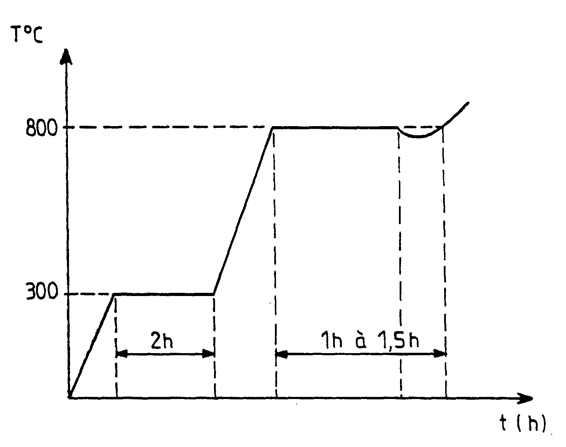

Les caractéristiques et avantages de l'invention seront exposés plus en détail dans la description ci-après de quelques exemples de réalisation, en regard du dessin annexé dans lequel la figure unique représente une courbe temps-température dans le procédé selon l'invention.

Dans les exemples, toutes les proportions sont données en poids.

### Exemple 1

On mélange à l'aide d'un broyeur à boulets 10 parties pondérales de poudre d'aluminium et 90 parties pondérales de poudre de BN, pendant 20 heures. On mouille 75 parties en poids du mélange pulvérulent, dont la granulométrie est comprise entre 3 et 10 µm, par 25 parties en poids d'une solution aqueuse d'alcool polyvinylique dans la proportion suivante: eau 80%, alcool polyvinylique 20%. La barbotine ainsi obtenue est ensuite filtrée sur un tamis métallique ayant une maille de 0,5 mm × 0,5 mm pour éliminer les éventuels agrégats. Après coulage de la barbotine dans une lingotière, on effectue une compaction sous une pression de 45 bars pour former un lingot que l'on sèche à une température inférieure ou égale à 70 °C pendant 20 heures au moins, afin de procéder à une élimination pratiquement complète de l'eau. Après élimination du liant par un traitement thermique à 300 °C, on immerge le lingot dans un bain d'aluminium fondu sous une pression de 11 Pa environ (0,08 Torr) pendant une durée comprise entre 1 heure et 1,5 heure; l'ensemble bain d'aluminium liquide et lingot est alors transféré, sur une durée ne dépassant pas 1 minute, dans un autoclave où il est soumis à une pression de 50 bars pendant une minute. Le lingot ainsi imprégné est extrait du bain d'aluminium liquide afin de se solidifier.

La courbe de la figure représente l'évolution dans le temps de la température du lingot depuis la fin du séchage jusqu'à sa séparation du bain d'aluminium.

Le lingot en composite Al-BN ainsi obtenu est réduit en copeaux d'une épaisseur inférieure à 2 mm par usinage (tournage); un mélange constitué de 60% de copeaux et de 40% de poudre de BN est ensuite broyé pour obtenir une poudre homogène de granulométrie comprise entre 2 et 5 µm. On réalise ensuite une barbotine constituée de 75% de poudres et de 25% d'une solution aqueuse d'alcool polyvinylique (eau 80%, alcool polyvinylique 20%).

On répète les opérations de coulage, cette fois-ci dans un moule aux formes de la pièce à obtenir, pressage, séchage et imprégnation décrites ci-dessus, en remplaçant le bain d'aluminium par un bain d'un alliage eutectique aluminium-silicium à 12% de silicium. La température d'imprégnation est portée à 850°C pour faciliter la pénétration de l'alliage fondu dans les pores d'un diamètre plus réduit que précédemment. A ceci près, la courbe de la figure reste valable.

On obtient ainsi une ébauche de pièce en composite alliage d'aluminium-particules de BN cohérente usinable aux cotes définitives au moyen d'outils classiques sans diamant.

Après usinage de la pièces aux cotes définitives, on réalise le processus de frittage-réaction en portant la pièce à la température de 1000 °C pendant 2 heures sous atmosphère d'azote. L'opération d'élimination de l'aluminium résiduel peut comprendre jusqu'à trois traitements thermiques successifs de deux à quinze minutes à l'air et à la pression atmosphérique, dans un four porté à une température comprise entre 1100 et 1250 °C, suivis chacun d'un refroidissement et d'un brossage de la pièce pour éliminer les. gouttelettes d'aluminium rassemblées en surface.

La composition chimique de la pièce, obtenue par analyse des phases formées par diffraction des rayons X, est la suivante:

| | |
|---|---|
| - AlN | 90% |
| - AlBₓ (x = 2, 10, 12, 25) | 4-6% |
| - Si₃N₄ | 2-3% |
| - Al-Si | 2% |

Les propriétés physiques, thermiques et mécaniques à température ambiante (20 °C) sont les suivantes:
- masse volumique: 2,8 à 2,9 g/cm³;
- porosité: 4 à 8%;
- résistance en flexion 3 points: 150 à 180 MPa (80 MPa à 1200 °C);
- résistance à la compression: 450 à 550 MPa;
- module d'élasticité: 120 MPa;
- ténacité: 14 MPa 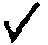 m;
- conductivité thermique: 15-18 W/m.K;
- coefficient de dilatation thermique: 9.10⁻⁶ °C⁻¹;
- température maximale d'utilisation: 1600 à 1650 °C;
- dureté: 200 HB.

### Exemple 2

Cet exemple illustre l'assemblage par brasage-diffusion de deux pièces obtenues par la mise en oeuvre du procédé selon l'invention jusqu'à l'étape e) seulement. Les pièces à assembler sont en matériau composite Al-BN et les surfaces à assembler peuvent être préparées mécaniquement au moyen d'une feuille abrasive classique.

On utilise une brasure contenant du silicium, de préférence un alliage Al-Si tel que ASA12 ou AS13, ayant un point de fusion inférieur à celui du composite Al-BN. La brasure est portée à une température supérieure à son point de fusion, avantageusement environ 950°C, et appliquée au pinceau sur les pièces à assembler, qui sont alors pressées l'une contre l'autre pendant 30 à 60 s.

Pour obtenir le matériau céramique définitif, l'assemblage est ensuite soumis à un frittage-réaction à 950°C pendant 1 h puis à 1250°C pendant 2 h.

### Exemple 3

Cet exemple illustre l'assemblage par brasage-diffusion de deux pièces en céramique obtenues par le procédé selon l'invention. Le processus de brasage-diffusion est facilité si les pièces à assembler contiennent encore une certaine quantité d'aluminium. Il est donc préférable d'omettre au moins en partie l'étape g) du procédé.

Dans l'exemple, les deux pièces sont obtenues à l'issue d'un frittage-réaction à 1000°C. On utilise la même brasure que dans l'exemple 2, appliquée de la même façon, les surfaces à assembler étant préparées à l'aide d'une toile diamantée.

L'assemblage est soumis à un post-frittage à 1100°C.

Il est également possible selon l'invention d'assembler par brasage-diffusion une pièce en matériau céramique AlN et une pièce en matériau composite Al-BN.

## Revendications

1. Procédé de fabrication d'une pièce en un matériau à base de nitrure d'aluminium AlN, **caractérisé par** les étapes suivantes:
a) préparation d'un mélange homogène de nitrure de bore BN, d'aluminium et d'un liant, à l'état liquide ou pâteux, propre à se solidifier par réaction chimique et/ou par séchage d'un solvant, le nitrure de bore et l'aluminium étant sous forme de poudres;
b) mise en forme dudit mélange par coulage en moule suivi de pressage et de chauffage à une température ne dépassant pas 70 °C environ pour durcir le liant et obtenir un cru solide et manipulable;
c) élimination du liant par chauffage à une température de l'ordre de 300°C;
d) imprégnation des pores du cru par immersion dans un bain d'aluminium ou d'un alliage d'aluminium à l'état fondu, séparation de la préforme imprégnée dudit bain et refroidissement;
e) usinage de la préforme en composite Al-BN aux cotes définitives de la pièce à obtenir;
f) frittage-réaction à une température comprise entre 900 et 1000 °C pour former une céramique à base de nitrure d'aluminium;
g) traitement thermique à une température comprise entre 1100 et 1250 °C pour faire migrer l'aluminium résiduel hors des pores de la pièce, et élimination mécanique de l'aluminium rassemblé en surface après refroidissement éventuel.

2. Procédé selon la revendication 1, **caractérisé en ce que**, dans l'étape a), on mélange 30 à 60 parties en poids de BN et 70 à 40 parties en poids d'aluminium, et de préférence environ 40 parties en poids de BN et 60 parties en poids d'aluminium.

3. Procédé selon l'une des revendications 1 et 2, **caractérisé en ce que** l'étape a) est subdivisée en
a1) préparation d'un premier mélange formé de poudres de BN et d'aluminium et d'une première fraction de liant;
a2) compactage par pressage sous une pression de 30 à 140 bars du premier mélange en un lingot et chauffage pour durcir le liant;
a3) élimination du liant;
a4) imprégnation des pores du lingot par de l'aluminium à l'état fondu, pour obtenir un lingot de composite Al-BN;
a5) usinage en copeaux du lingot de composite Al-BN, mélange avec de la poudre de BN et broyage;
a6) mélange de la poudre résultante avec une seconde fraction de liant.

4. Procédé selon la revendication 3, **caractérisé en ce que** les proportions massiques des constituants sont voisines de 90% de BN pour 10% d'aluminium dans l'étape al), 60% de copeaux du premier composite Al-BN pour 40% de poudre de BN dans l'étape a5) et 75% de poudres pour 25% de liant dans les étapes a1) et a6).

5. Procédé selon l'une des revendications précédentes, **caractérisé en ce que** le liant est une solution aqueuse d'un polymère organique, préférentiellement de l'alcool polyvinylique.

6. Procédé selon l'une des revendications précédentes, **caractérisé en ce que** la mise en forme de l'étape b) et/ou le compactage du stade a2) sont effectués sous une pression voisine de 45 bars.

7. Procédé selon l'une des revendications précédentes, **caractérisé en ce que** l'imprégnation de l'étape c) et/ou du stade a3) est réalisée par immersion dans le bain d'imprégnation d'abord sous vide, de préférence sous une pression résiduelle de l'ordre de 10 Pa, puis sous pression comprise entre 40 et 60 bars, de préférence 50 bars.

8. Procédé selon l'une des revendications précédentes, **caractérisé en ce que** l'imprégnation de l'étape c) est réalisée par un alliage d'aluminium et de silicium dont la température de fusion est inférieure à celle de l'aluminium, de préférence un alliage eutectique, porté à une température comprise entre 740 et 850 °C, de préférence d'environ 800 °C.

9. Procédé selon l'une des revendications précédentes, **caractérisé en ce que** l'étape f) est réalisée en atmosphère neutre, préférentiellement sous azote.

10. Procédé selon l'une des revendications précédentes, **caractérisé en ce que** le traitement thermique de l'étape g) est réalisé à l'air à la pression atmosphérique.

11. Procédé selon l'une des revendications précédentes, **caractérisé en ce qu'**on prépare séparément deux composants en mettant en oeuvre au moins les étapes a) à e), on assemble ces deux composants par brasage-diffusion et on soumet le cas échéant l'assemblage obtenu aux étapes du procédé qui ont été omises pour l'un au moins des composants.

12. Procédé selon la revendication 11, **caractérisé en ce que** les deux composants sont obtenus à l'issue de l'étape e) et **en ce que** l'assemblage par brasage-diffusion est suivi d'un frittage-réaction effectué dans l'intervalle de 950 à 1250 °C, préférentiellement à environ 950 °C pendant environ 1 heure puis à environ 1250 °C pendant environ deux heures.

13. Procédé selon la revendication 11, **caractérisé en ce que** les deux composants sont obtenus à l'issue d'un frittage-réaction à une température comprise entre 950 et 1100 °C, préférentiellement 1000 °C environ, et **en ce que** l'assemblage par brasage-diffusion est suivi d'un post-frittage réalisé entre 1000 et 1250 °C, préférentiellement à 1100 °C environ.

## Patentansprüche

1. Verfahren zur Herstellung eines Teils aus einem Material auf der Basis von Aluminiumnitrid AIN,
**dadurch gekennzeichnet, dass** es die folgenden Schritte umfasst:
a) Herstellen einer homogenen Mischung aus Bornitrid BN, Aluminium und einem Bindemittel, einen flüssigen oder pastigen Zustand aufweisend und fähig, sich durch chemische Reaktion und/oder durch Trocknung eines Lösungsmittels zu verfestigen bzw. hart zu werden, wobei das Bornitrid und das Aluminium pulverförmig sind;
b) Formen der genannten Mischung mittels Formguss, gefolgt von Pressen und Erwärmen auf eine Temperatur, die ungefähr 70°C nicht überschreitet, um das Bindemittel zu härten und einen festen und bearbeitbaren Rohling zu erhalten;
c) Eliminieren des Bindemittels durch Erhitzen auf eine Temperatur in der Größenordnung von 300°C;
d) Imprägnieren der Poren des Rohlings durch Eintauchen in ein Bad mit Aluminium oder Aluminiumlegierung im geschmolzenen Zustand, Herausnehmen des imprägnierten Vorformlings aus dem Bad und Abkühlen;
e) Bearbeiten des AI-BN-Verbund-Vorformlings entsprechend den Fertigmaßen des herzustellenden Teils;
f) Reaktionssintern mit einer zwischen 900 und 1000°C enthaltenen Temperatur, um eine Keramik auf Aluminiumnitridbasis zu bilden;
g) Wärmebehandlung bei einer zwischen 1100 und 1250°C enthaltenen Temperatur, um das Restaluminium aus den Poren des Teils migrieren bzw. abwandern zu lassen, und mechanische Beseitigung des an der Oberfläche angesammelten Aluminiums nach eventueller Abkühlung.

2. Verfahren nach Anspruch 1, **dadurch gekennzeichnet, dass** man in Schritt a) 30 bis 60 Gewichtsanteile BN und 70 bis 40 Gewichtsanteile Aluminium und vorzugsweise ungefähr 40 Gewichtsanteile BN und 60 Gewichtsanteile Aluminium mischt.

3. Verfahren nach einem der Ansprüche 1 und 2, **dadurch gekennzeichnet, dass** der Schritt a) unterteilt wird in
a1) Herstellen einer ersten Mischung, gebildet durch BN-Pulver und Aluminiumpulver und einem ersten Bindemittel-Anteil;
a2) Verdichten der ersten Mischung durch Pressung mit einem Druck von 30 bis 140 bar, um einen Block zu erhalten, und Erwärmen, um das Bindemittel zu härten;
a3) Eliminieren des Bindemittels;
a4) Imprägnieren der Poren des Blocks durch Aluminium im geschmolzenen Zustand, um einen Al-BN-Verbundblock zu erhalten;
a5) Spänebearbeiten des Al-BN-Verbundblocks, Mischen mit dem BN-Pulver und Vermahlen;
a6) Vermischen des resultierenden Pulvers mit einem zweiten Bindemittel-Anteil.

4. Verfahren nach Anspruch 3, **dadurch gekennzeichnet, dass** die Massenproportionen der Bestandteile ungefähr betragen: im Schritt a1) 90% BN auf 10% Aluminium, im Schritt a5) 60% Späne des ersten Al-BN-Verbundmaterials auf 40% BN-Pulver, und in den Schritten a1) und a6) 75% Pulver auf 25% Bindemittel.

5. Verfahren nach einem der vorangehenden Ansprüche, **dadurch gekennzeichnet, dass** das Bindemittel eine wässrige Lösung eines organischen Polymers ist, vorzugsweise Polyvinylalkohol.

6. Verfahren nach einem der vorangehenden Ansprüche, **dadurch gekennzeichnet, dass** das Formen im Schritt b) und/oder das Verdichten im Stadium a2) unter einem Druck von ungefähr 45 bar erfolgt.

7. Verfahren nach einem der vorangehenden Ansprüche, **dadurch gekennzeichnet, dass** das Imprägnieren im Schritt c) und/oder im Stadium a3) durch Eintauchen in das Imprägnierbad zunächst unter Vakuum erfolgt, vorzugsweise unter einem Restdruck in der Größenordnung von 10 Pa, dann unter einem Druck zwischen 40 und 60 bar, vorzugsweise 50 bar.

8. Verfahren nach einem der vorangehenden Ansprüche, **dadurch gekennzeichnet, dass** das Imprägnieren im Schritt c) in einer Legierung aus Aluminium und Silizium erfolgt, deren Schmelztemperatur niedriger ist als die des Aluminiums und die vorzugsweise eine eutektische Legierung ist mit einer Temperatur zwischen 740 und 850°C, vorzugsweise ungefähr 800°C ist.

9. Verfahren nach einem der vorangegangenen Ansprüche, **dadurch gekennzeichnet, dass** der Schritt f) in neutralem Gas, vorzugsweise in Stickstoff, erfolgt.

10. Verfahren nach einem der vorangehenden Ansprüche, **dadurch gekennzeichnet, dass** die Wärmebehandlung des Schritts g) in Luft unter Luftdruck erfolgt.

11. Verfahren nach einem der vorangehenden Ansprüche, **dadurch gekennzeichnet, dass** man getrennt zwei Bauteile herstellt, indem man die Schritte a) bis e) durchführt, man diese beiden Bauteile durch Diffusionslötung zusammenbaut und ggf. den hergestellten Aufbau den Schritten des Verfahrens unterzieht, die bei wenigstens einem der Bauteile weggelassen wurden.

12. Verfahren nach Anspruch 11, **dadurch gekennzeichnet, dass** die beiden Bauteile am Ende des Schritts e) hergestellt sind und dass auf den Zusammenbau durch Diffusionslötung ein Reaktionsintern folgt, durchgeführt in dem Intervall zwischen 950 und 1250°C, vorzugsweise bei ungefähr 950°C während ungefähr 1 Stunde und dann bei ungefähr 1250°C während ungefähr zwei Stunden.

13. Verfahren nach Anspruch 11, **dadurch gekennzeichnet, dass** die beiden Bauteile am Ende eines Reaktionssinterns bei einer Temperatur zwischen 950 und 1100°C und vorzugsweise ungefähr 1000°C hergestellt sind, und dadurch, dass auf den Zusammenbau mittels Diffusionslötung ein Nachsintern folgt, durchgeführt zwischen 1000 und 1250°C, vorzugsweise bei ungefähr 1100°C.

## Claims

1. Process for manufacturing an article made of a material based on aluminium nitride AlN, **characterized by** the following steps of:
a) preparing a homogeneous mixture of boron nitride BN, aluminium and a binder, in liquid or pasty form, which is capable of solidifying by chemical reaction and/or by drying of a solvent, the boron nitride and the aluminium being in the form of powders;
b) shaping the said mixture by casting it in a mould, followed by pressing and heating to a temperature not exceeding about 70°C to harden the binder and to obtain a solid, manipulable crude product;
c) removing the binder by heating to a temperature of about 300°C;
d) impregnating the pores of the crude product by immersing it in a bath of aluminium or of an aluminium alloy in molten form, separating the impregnated preform from the said bath and cooling;
e) machining the preform made of Al-BN composite to the final dimensions of the article to be obtained;
f) performing a sintering reaction at a temperature of between 900°C and 1000°C to form a ceramic based on aluminium nitride;
g) heat-treating at a temperature of between 1100°C and 1250°C to make the residual aluminium migrate out of the pores of the article, and mechanically removing the aluminium collected at the surface after optional cooling.

2. Process according to Claim 1, **characterized in that**, in step a), 30 to 60 parts by weight of BN and 70 to 40 parts by weight of aluminium, and preferably about 40 parts by weight of BN and 60 parts by weight of aluminium, are mixed together.

3. Process according to either of Claims 1 and 2, **characterized in that** step a) is subdivided into
a1) preparing a first mixture formed of BN powder and aluminium powder and of a first fraction of binder;
a2) compacting, by pressing under a pressure of 30 to 140 bar, the first mixture into an ingot and heating to harden the binder;
a3) removing the binder;
a4) impregnating the pores of the ingot with molten aluminium, to obtain an ingot of Al-BN composite;
a5) machining the ingot of Al-BN composite into chips, mixing with BN powder and grinding;
a6) mixing the resulting powder with a second fraction of binder.

4. Process according to Claim 3, **characterized in that** the proportions by mass of the constituents are in the region of 90% of BN to 10% of aluminium in step a1), 60% of chips of the first Al-BN composite to 40% of BN powder in step a5) and 75% of powders to 25% of binder in steps a1) and a6).

5. Process according to one of the preceding claims, **characterized in that** the binder is an aqueous solution of an organic polymer, preferably of polyvinyl alcohol.

6. Process according to one of the preceding claims, **characterized in that** the shaping in step b) and/or the compacting in step a2) are carried out under a pressure in the region of 45 bar.

7. Process according to one of the preceding claims, **characterized in that** the impregnation in step c) and/or in stage a3) is carried out by immersion in the impregnation bath, first under vacuum, preferably under a residual pressure of about 10 Pa, and then under a pressure of between 40 and 60 bar, preferably 50 bar.

8. Process according to one of the preceding claims, **characterized in that** the impregnation in step c) is carried out with an alloy of aluminium and silicon whose melting point is less than that of aluminium, preferably a eutectic alloy, raised to a temperature of between 740°C and 850°C and preferably of about 800°C.

9. Process according to one of the preceding claims, **characterized in that** step f) is carried out in a neutral atmosphere, preferably under nitrogen.

10. Process according to one of the preceding claims, **characterized in that** the heat treatment in step g) is carried out in air at atmospheric pressure.

11. Process according to one of the preceding claims, **characterized in that** two components are separately prepared by using at least the steps a) to e), these two components are assembled by brazing-diffusion and, where appropriate, the assembly obtained is submitted to the steps of the process which have been omitted for at least one of the components.

12. Process according to Claim 11, **characterized in that** the two components are obtained after step e) and **in that** the assembly by brazing-diffusion is followed by a sintering reaction carried out in the range from 950°C to 1250°C, preferably at about 950°C for about 1 hour and then at about 1250°C for about two hours.

13. Process according to Claim 11, **characterized in that** the two components are obtained after a sintering reaction at a temperature of between 950°C and 1100°C, preferably about 1000°C, and **in that** the assembly by brazing-diffusion is followed by a post-sintering carried out at between 1000°C and 1250°C, preferably at about 1100°C.
